# FASCICULE DE BREVET EUROPEEN

(11) **EP 4 053 421 B1**
(45) Date de publication et mention de la délivrance du brevet: **27.12.2023**
(21) Numéro de dépôt: 22158405.5
(22) Date de dépôt: 24.02.2022
(51) Int. Cl.: F16B 21/12, F16B 21/14, F16B 37/04, F16B 5/06, E04F 13/08, F16B 7/04

(54) **DISPOSITIF DE FIXATION DE PANNEAUX À DISTANCE D'UNE STRUCTURE**
VORRICHTUNG ZUM BEFESTIGEN VON PLATTEN IN EINEM ABSTAND VON EINER STRUKTUR
DEVICE FOR ATTACHING PANELS SEPARATED FROM A STRUCTURE

(30) Priorité: 24.02.2021 FR 2101785
(43) Date de publication de la demande: 07.09.2022
(73) Titulaire: Zifort, 01430 Saint-Martin-du-Frene (FR)
(72) Inventeur: DEMIRBAS, Mehmet Emin, 01430 SAINT MARTIN DU FRESNE (FR)
(74) Mandataire: Germain Maureau

(56) Documents cités:
- EP-A1- 3 009 582
- EP-A1- 3 126 591
- EP-A2- 2 647 780

## Description

### Domaine technique

La présente invention concerne concerne un dispositif pour la fixation de panneaux à distance d'une structure support fixe consistant en une paroi verticale telle qu'un mur ou une cloison de séparation ou une paroi horizontale telle qu'un plafond. L'invention s'applique notamment à la réalisation d'un doublage de mur ou d'un faux plafond en vue de son isolation thermique et/ou phonique par exemple.

### Etat de la technique

Dans le domaine de la construction, et plus particulièrement dans celui du « second oeuvre », il est bien connu de procéder à un doublage de parois verticales, à l'intérieur du bâtiment, visant à procurer une isolation thermique, acoustique, ainsi qu'un aspect uniforme et lisse, au moyen de plaques de plâtre mises en appui contre des fourrures usuellement verticales et vissées à ces dernières. Afin d'assurer la distance idoine entre le mur et la cloison de doublage, on utilise des dispositifs de fixation bien connus de l'homme du métier.

C'est le cas notamment des documents EP718451 et EP727546 qui décrivent des systèmes composés de tiges filetées fixées à la paroi à isoler, de matelas de laine minérale que l'on embroche sur ou intercale entre les tiges filetées, puis maintient contre la paroi par des profilés métalliques solidarisés aux tiges filetées par l'intermédiaire de platines taraudées. Ces platines comportent par exemple deux mâchoires diamétralement opposées leur permettant de venir en engagement avec les ailes de retour d'un profilé en U tous les demi-tours de rotation.

Ce type de système permet un réglage fin de la distance du profilé déjà en place à la paroi mais présente l'inconvénient d'être peu ergonomique et de nécessiter un temps de pose assez important.

On connaît également les documents FR2822179, FR2852989, EP1156172, WO03/008734 et FR2785312 décrivant des dispositifs de fixation.

Les documents FR2822179 et FR2852989 décrivent des perfectionnements dans lesquels un cavalier de maintien et blocage du profilé en U est monté à rotation, ou vissé à la platine taraudée.

Le document EP1156172 décrit un cavalier support du profilé en U associé à un levier permettant de fixer sa position sur une tige filetée d'entretoisement par un système de guillotine.

Le document WO03/008734 décrit un système comparable fonctionnant par pincement d'une tige d'entretoisement, sous l'action d'un ressort de rappel, le pincement pouvant être libéré par action d'une force sur un double levier.

Le document FR2785312 décrit des éléments d'entretoisement, positionnement et maintien d'un profilé en U comportant des filetages chanfreinés, des taraudages alésés, et nécessitant l'utilisation d'un outil supplémentaire, tel qu'une clé. Les profilés peuvent être dits en C, I, L, U, W, Z selon leur forme et sont également appelés fourrures.

Tous ces dispositifs présentent l'inconvénient d'être peu ergonomique et de nécessiter un temps de pose assez important.

Afin de remédier à cet inconvénient, on a déjà imaginé des dispositifs permettant une pose plus rapide et plus aisée de ces dispositifs de fixation. C'est le cas notamment du brevet européen EP1880066 et du brevet européen EP3126591.

Le document EP1880066 décrit un doublage de paroi comprenant des éléments d'entretoisement fixés sur la paroi, un isolant thermique et/ou acoustique embroché sur ou intercalé entre les éléments d'entretoisement, des fourrures d'appui d'un parement maintenues sur des éléments de maintien qui sont engagés chacun sur un élément d'entretoisement, chaque élément de maintien comportant un unique levier solidaire de l'élément de maintien, ledit levier étant adapté pour bloquer et débloquer une translation de direction sensiblement perpendiculaire à la paroi de l'élément de maintien sur l'élément d'entretoisement associé et chaque élément de maintien étant bloqué en translation sur ledit élément d'entretoisement associé, ledit levier étant en butée sur la fourrure qui es fixée par l'élément de maintien. Par ailleurs, l'élément d'entretoisement comprend une tige filetée dont le filetage est chanfreiné en au moins une fraction angulaire et l'élément de maintien d'une fourrure comprend un taraudage correspondant au filetage de la tige et alésée en au moins une fraction angulaire non chanfreinés du filetage de sorte que les deux éléments soient de libre translation relative selon l'axe de la tige quand la ou les fractions angulaires filetées de la tige est mise en regard de la ou des fractions angulaires chanfreinées du filetage en regard de la ou des fractions angulaires de taraudage.

Le document EP3126591 décrit un élément de maintien comprenant une tige dont une portion de la longueur dite longueur de travail correspond à l'épaisseur d'un élément de construction à maintenir par ledit élément, la tige présentant un filetage, l'élément de maintien comprenant une molette de forme sensiblement circulaire et recevant dans un évidement médian la tige de manière amovible, la molette étant munie de moyens de solidarisation avec la tige comprenant des moyens de vissage coopérant avec le filetage de la tige pour le réglage de la longueur de travail de la tige par vissage ou dévissage de la molette autour de la tige. Les moyens de solidarisation de la molette comportent deux plaques de solidarisation logées dans la molette de l'élément de maintien et s'étendant en direction opposée l'une de l'autre selon un axe de déplacement suivant un diamètre de la molette, chaque plaque étant mobile entre, d'une part, une première position dans laquelle sa position d'extrémité intérieure se trouve sur le passage de l'évidement et son extrémité extérieure fait saillie latéralement de la molette et, d'autre part, une seconde position dans laquelle sa portion d'extrémité intérieure libère le passage de l'évidement quand une action est exercée sur son extrémité extérieure par le poseur.

Le document EP 3 009 582 A1 décrit un dispositif d'entretoisement pour la fixation d'un profilé de support d'une cloison de doublage d'une paroi à isoler.

Ces dispositifs, bien que permettant une pose plus rapide, présentent l'inconvénient d'être onéreux.

### Divulgation de l'invention

L'un des buts de l'invention est donc de remédier à ces inconvénients en proposant un dispositif pour la fixation de panneaux à distance d'une structure de conception simple et peu onéreuse, ainsi qu'ayant une bonne ergonomie.

A cet effet, et conformément à l'invention, il est proposé un dispositif pour la fixation de panneaux à distance d'une structure support, ledit dispositif comprenant au moins une tige dont une première extrémité comporte des moyens de fixation à ladite structure, un cavalier conformé de manière à venir se clipser sur un élément profilé de section sensiblement en forme de C muni de deux rebords coplanaires, communément appelé fourrure, ledit cavalier comportant une partie tubulaire formant un canal à l'intérieur duquel la tige peut coulisser afin de permettre un déplacement dudit cavalier le long de la tige, et des moyens de verrouillage/déverrouillage aptes à prendre au moins deux positions, une position dite déverrouillée dans laquelle dans laquelle le cavalier est apte à coulisser le long de la tige et une position verrouillée dans laquelle le cavalier est bloqué sur la tige ; ledit dispositif étant remarquable en ce que les moyens de verrouillage/déverrouillage comprennent des moyens de préhension solidaires d'une tige à l'extrémité libre de laquelle s'étendent deux mors élastiquement déformables et aptes à coopérer avec la partie tubulaire du cavalier, et au moins une lamelle s'étendant entre les deux mors, ladite lamelle étant apte à être insérée dans des première fentes transversales pratiquées dans la partie tubulaire du cavalier et dans des secondes fentes transversales pratiquées dans la tige, les première et seconde fentes s'étendant au droit les unes des autres lorsque la tige est introduite dans la partie tubulaire du cavalier.

De préférence, les deux mors des moyens de verrouillage/déverrouillage présentent une forme générale de C.

Par ailleurs, chaque mors présente sur sa face interne un creux cylindrique dit distal, s'étendant à proximité de l'extrémité distale dudit mors, de rayon de courbure sensiblement égal au rayon de la paroi externe de la partie tubulaire du cavalier.

De plus, chaque mors présente sur sa face interne un second creux cylindrique dit proximal, s'étendant à proximité de la tige des moyens de verrouillage/déverrouillage, de rayon de courbure sensiblement égal au rayon de la paroi externe de la partie tubulaire du cavalier.

De préférence, les moyens de verrouillage/déverrouillage comprennent une pluralité de lamelles s'étendant parallèlement les unes par rapport aux autres avec un espacement égal à l'espacement entre les fentes et depuis la base des mors jusqu'à la partie médiale desdits mors.

Accessoirement, les extrémités distales des lamelles sont concaves, le rayon de courbure des extrémités concaves étant sensiblement égal au rayon de la paroi externe de la partie tubulaire du cavalier.

De préférence, la tige munie des moyens de fixation présente une section transversale circulaire.

De manière alternative, la tige munie des moyens de fixation présente une section transversale en forme de croix.

Par ailleurs, les moyens de fixation de la tige consistent en une tête apte à se clipser sur un élément profilé en forme générale de U ou de C, ladite tête comprenant des gorges.

De plus, le cavalier est constitué d'une platine comprenant sur l'une de ses faces une partie tubulaire formant un canal à l'intérieur duquel la tige peut coulisser et sur sa face opposée un plot sensiblement hémisphérique ou tronconique muni d'une gorge annulaire, ladite gorge annulaire étant apte à recevoir les deux rebords coplanaires d'un élément profilé de section sensiblement en forme de C.

### Brève description des dessins

D'autres avantages et caractéristiques ressortiront mieux de la description qui va suivre de plusieurs variantes d'exécutions, données à titre d'exemples non limitatifs, du dispositif pour la fixation de panneaux à distance d'une structure conforme à l'invention, en référence aux dessins annexés sur lesquels :
[Fig. 1] est une vue en perspective éclatée du dispositif pour la fixation de panneaux à distance d'une structure suivant l'invention,
[Fig. 2] est une vue de côté de la tige munie de moyens de fixation du dispositif pour la fixation de panneaux à distance d'une structure suivant l'invention,
[Fig. 3] est une vue arrière de la tige munie de moyens de fixation du dispositif pour la fixation de panneaux à distance d'une structure suivant l'invention,
[Fig. 4] est une vue de dessus des moyens de verrouillage/déverrouillage du dispositif pour la fixation de panneaux à distance d'une structure suivant l'invention,
[Fig. 5] est une vue de face des moyens de verrouillage/déverrouillage du dispositif pour la fixation de panneaux à distance d'une structure suivant l'invention,
[Fig. 6] est une vue de côté du cavalier du dispositif pour la fixation de panneaux à distance d'une structure suivant l'invention,
[Fig. 7] est une vue de dessus du cavalier du dispositif pour la fixation de panneaux à distance d'une structure suivant l'invention,
[Fig. 8] est une vue de dessous du cavalier du dispositif pour la fixation de panneaux à distance d'une structure suivant l'invention,
[Fig. 9] est une vue de côté de la tige munie de moyens de fixation d'une première variante d'exécution du dispositif pour la fixation de panneaux à distance d'une structure suivant l'invention,
[Fig. 10] est une vue de côté du cavalier de la première variante d'exécution du dispositif pour la fixation de panneaux à distance d'une structure suivant l'invention,
[Fig. 11] est une vue de dessus des moyens de verrouillage/déverrouillage de la première variante d'exécution du dispositif pour la fixation de panneaux à distance d'une structure suivant l'invention,
[Fig. 12] est une vue de côté de la tige munie de moyens de fixation d'une seconde variante d'exécution du dispositif pour la fixation de panneaux à distance d'une structure suivant l'invention
[Fig. 13] est une vue de côté du cavalier de la seconde variante d'exécution du dispositif pour la fixation de panneaux à distance d'une structure suivant l'invention
[Fig. 14] est une vue de dessus des moyens de verrouillage/déverrouillage de la seconde variante d'exécution du dispositif pour la fixation de panneaux à distance d'une structure suivant l'invention.

### Mode de réalisation de l'invention

Dans la suite de la description du dispositif pour la fixation de panneaux à distance d'une structure support suivant l'invention, les mêmes références numériques désignent les mêmes éléments. Les différentes vues ne sont pas nécessairement tracées à l'échelle.

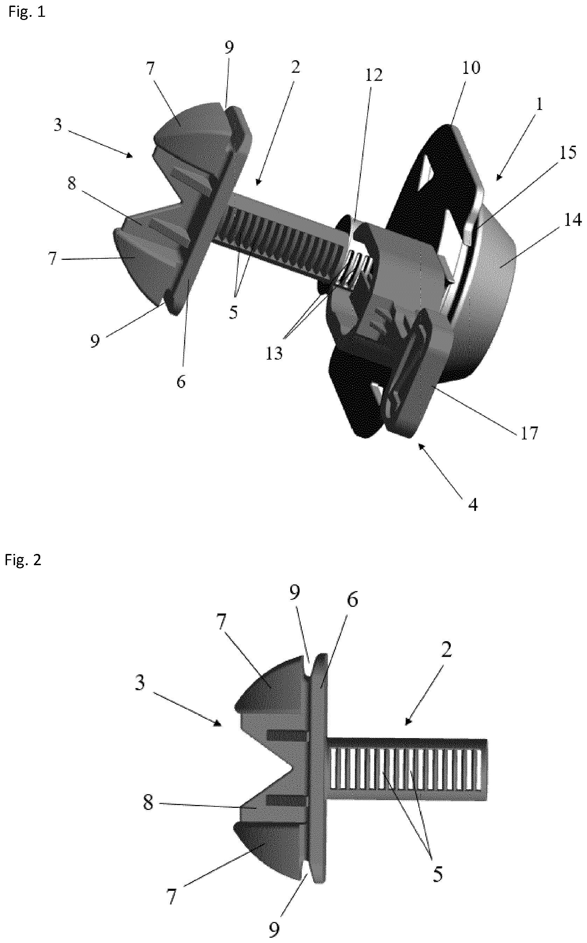

Le dispositif suivant l'invention, en référence à la figure 1, comporte un cavalier 1 destiné à se clipser sur un premier élément profilé communément appelé fourrure, une tige 2 destinée à coopérer avec le cavalier 1 et comportant à une extrémité une tête 3 destinée à se clipser sur un second élément profilé, et des moyens de verrouillage/déverrouillage 4 aptes à prendre au moins deux positions, une position dite déverrouillée dans laquelle dans laquelle le cavalier 1 est apte à coulisser le long de la tige 2 et une position verrouillée dans laquelle le cavalier 1 est bloqué sur ladite tige, le premier et le second élément profilé n'étant pas représenté sur la figure.

Bien que non représentés sur les figures, les premier et second éléments profilés, aussi appelés fourrures, sont situés dans des plans sensiblement parallèles mais décalés. Le second élément profilé est fixé à une structure fixe, par exemple un mur, une cloison ou un plafond, et le premier élément profilé est fixé orthogonalement au second élément profilé en vue de recevoir un parement. L'espace entre le mur, la cloison ou le plafond et le parement est destiné à être occupé par un matériau isolant. Chaque élément profilé est usuellement en forme de C comprenant une âme nervurée dans sa partie centrale et bordée de deux ailes parallèles qui s'étendent perpendiculairement à l'âme et sont prolongées par deux rebords coplanaires qui s'étendent l'un vers l'autre en délimitant un passage longitudinal.

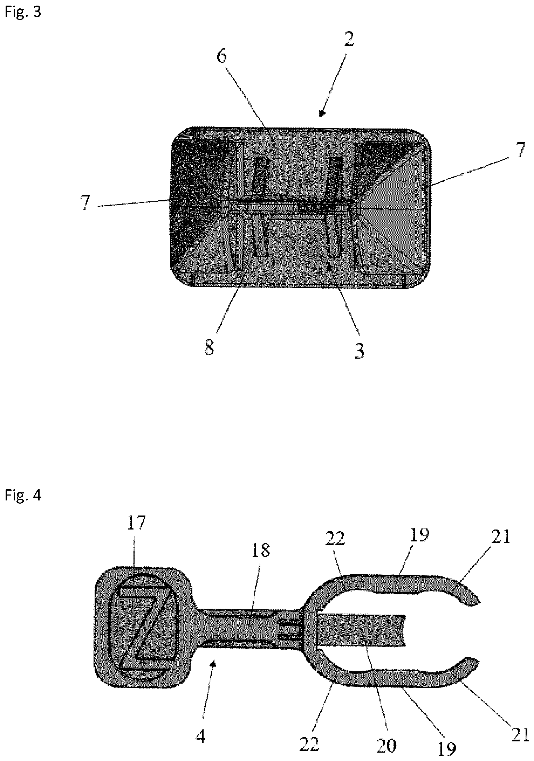

En référence aux figures 1 à 3, la tige 2 présente une section transversale circulaire et est munie de fentes transversales traversantes 5 parallèles sur toute sa longueur.

Il est bien évident que la tige 2 pourra comporter des fentes 5 que sur une partie de sa longueur, préférentiellement, depuis sa partie médiale jusqu'à son extrémité distale, et que les fentes transversales 5 pourront ne pas être traversantes sans pour autant sortir du cadre de l'invention.

Par ailleurs, ladite tige 2 comprend à son extrémité proximale une embase 6 sensiblement rectangulaire formant une garde, ladite embase 6 s'étendant perpendiculairement à la tige 2, dont la face opposée à la tige 2 porte la tête 3. Ladite tête 3 est constituée de deux plots 7 de forme sensiblement tétraédriques séparés par une entretoise 8 en forme générale de V. Chacun de ces deux plots 7 comprend, au voisinage de ladite embase 6, une gorge 9 qui s'étend parallèlement à l'embase 6, ces deux gorges 9 étant destinées à recevoir les deux rebords coplanaires d'un élément profilé de section sensiblement en forme de C, communément appelé fourrure, non représenté sur les figures.

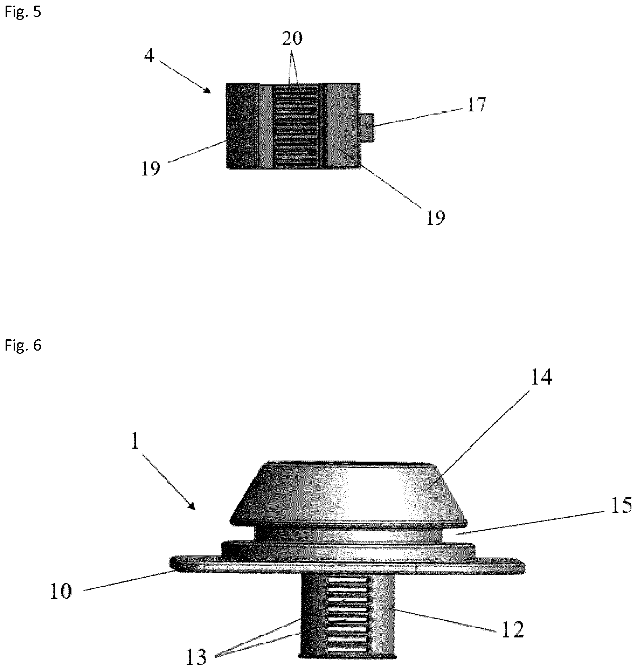

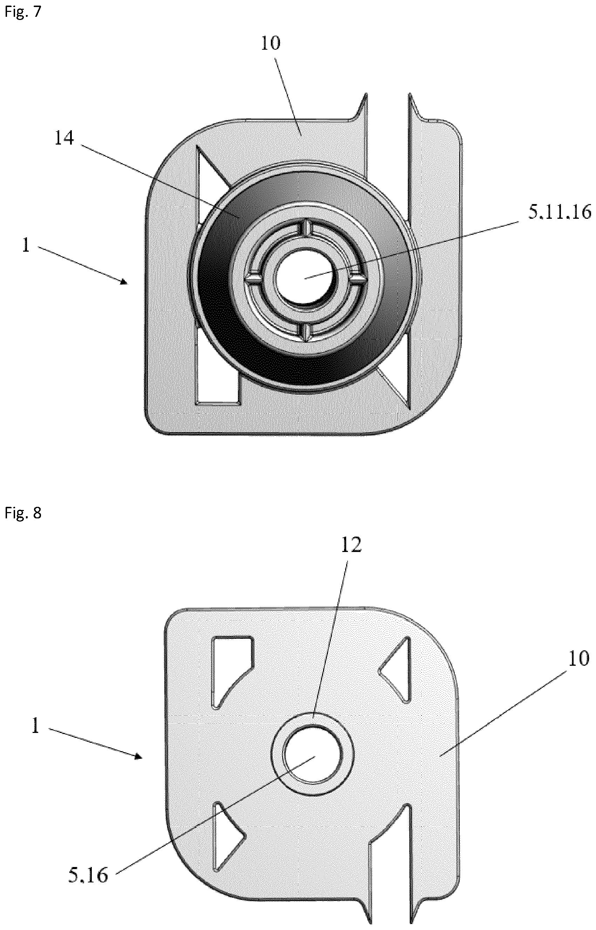

De plus, en référence aux figures 1 et 6 à 8, le cavalier est constitué d'une platine 10 comprenant un trou central 11, sur l'une de ses faces une partie tubulaire 12 formant un canal à l'intérieur duquel la tige 2 peut coulisser, ladite partie tubulaire 12 comprenant une pluralité de fentes 13, et, sur sa face opposée, un second plot 14 sensiblement tronconique muni d'une gorge annulaire 15 à sa base, ladite gorge annulaire 15 étant apte à recevoir les deux rebords coplanaires d'un élément profilé de section sensiblement en forme de C, et d'un trou traversant 16, ledit trou traversant 16, le trou central 11 et la partie tubulaire étant coaxiaux.

Par ailleurs, en référence aux figures 1, 4 et 5, les moyens de verrouillage/déverrouillage 4 comprennent des moyens de préhension 17 solidaires d'une tige 18 à l'extrémité libre de laquelle s'étendent deux mors 19 élastiquement déformables et aptes à coopérer avec la partie tubulaire du cavalier 1, et une pluralité de lamelles 20 s'étendant entre les deux mors 7. Dans cet exemple particulier de réalisation, les deux mors 19 des moyens de verrouillage/déverrouillage 4 présentent une forme générale de C. Par ailleurs, chaque mors 19 présente sur sa face interne un creux cylindrique dit distal 21, s'étendant à proximité de l'extrémité distale dudit mors 19, de rayon de courbure sensiblement égal au rayon de la paroi externe de la partie tubulaire 12 du cavalier 1. De plus, chaque mors 19 présente sur sa face interne un second creux cylindrique dit proximal 22, s'étendant à proximité de la tige 18 des moyens de verrouillage/déverrouillage 4, de rayon de courbure sensiblement égal au rayon de la paroi externe de la partie tubulaire 12 du cavalier 1. Les lamelles 20 s'étendent parallèlement les unes par rapport aux autres avec un espacement égal à l'espacement entre les fentes 5 de la tige 2 et les fentes 13 de la partie tubulaire 12 du cavalier 1 et depuis la base des mors 19 jusqu'à la partie médiale desdits mors 19. Accessoirement, les extrémités distales des lamelles 20 sont concaves, le rayon de courbure des extrémités concaves étant sensiblement égal au rayon de la paroi externe de la partie tubulaire 12 du cavalier 1.

Il est bien évident que les moyens de verrouillage/déverrouillage pourront ne comprendre qu'une seule lamelle 20 sans pour autant sortir du cadre de l'invention.

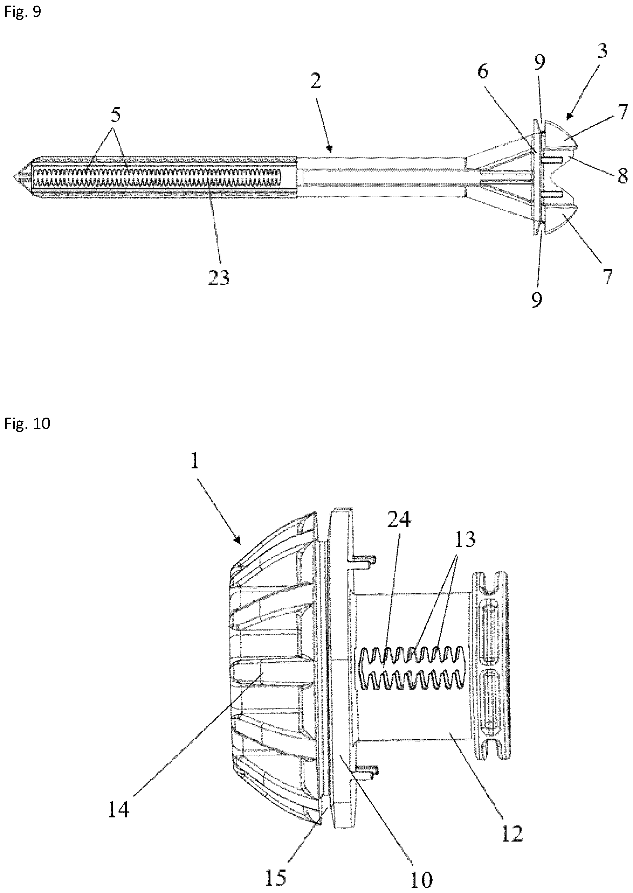

Selon une première variante d'exécution du dispositif suivant l'invention, en référence aux figures 9 à 11, ce dernier comporte de la même manière que précédemment un cavalier 1 destiné à se clipser sur un premier élément profilé communément appelé fourrure, une tige 2 destinée à coopérer avec le cavalier 1 et comportant à une extrémité une tête 3 destinée à se clipser sur un second élément profilé, et des moyens de verrouillage/déverrouillage 4 aptes à prendre au moins deux positions, une position dite déverrouillée dans laquelle dans laquelle le cavalier 1 est apte à coulisser le long de la tige 2 et une position verrouillée dans laquelle le cavalier 1 est bloqué sur ladite tige, le premier et le second élément profilé n'étant pas représenté sur la figure.

En référence à la figure 9, la tige 2 présente une section transversale en forme de croix et est munie de fentes transversales traversantes 5 parallèles sur une partie de sa longueur, sensiblement depuis la partie médiale de la tige 2 jusqu'à son extrémité distale, et d'une fente longitudinale 23 traversant les fentes transversales 5.

Il est bien évident que la tige 2 pourra comporter des fentes 5 que sur toute sa longueur sans pour autant sortir du cadre de l'invention.

Par ailleurs, ladite tige 2 comprend à son extrémité proximale une embase 6 sensiblement rectangulaire formant une garde, ladite embase 6 s'étendant perpendiculairement à la tige 2, dont la face opposée à la tige 2 porte la tête 3. Ladite tête 3 est constituée de deux plots 7 de forme sensiblement tétraédriques séparés par une entretoise 8 en forme générale de V. Chacun de ces deux plots 7 comprend, au voisinage de ladite embase 6, une gorge 9 qui s'étend parallèlement à l'embase 6, ces deux gorges 9 étant destinées à recevoir les deux rebords coplanaires d'un élément profilé de section sensiblement en forme de C, communément appelé fourrure, non représenté sur les figures.

De plus, en référence à la figure 10, le cavalier 1 est constitué d'une platine 10 comprenant un trou central 11, sur l'une de ses faces une partie tubulaire 12 formant un canal à l'intérieur duquel la tige 2 peut coulisser, ladite partie tubulaire 12 comprenant une pluralité de fentes 13 transversales et d'une fente longitudinale 24, et, sur sa face opposée, un second plot 14 sensiblement hémisphérique muni d'une gorge annulaire 15 à sa base, ladite gorge annulaire 15 étant apte à recevoir les deux rebords coplanaires d'un élément profilé de section sensiblement en forme de C, et d'un trou traversant 16, ledit trou traversant 16, le trou central 11 et la partie tubulaire étant coaxiaux.

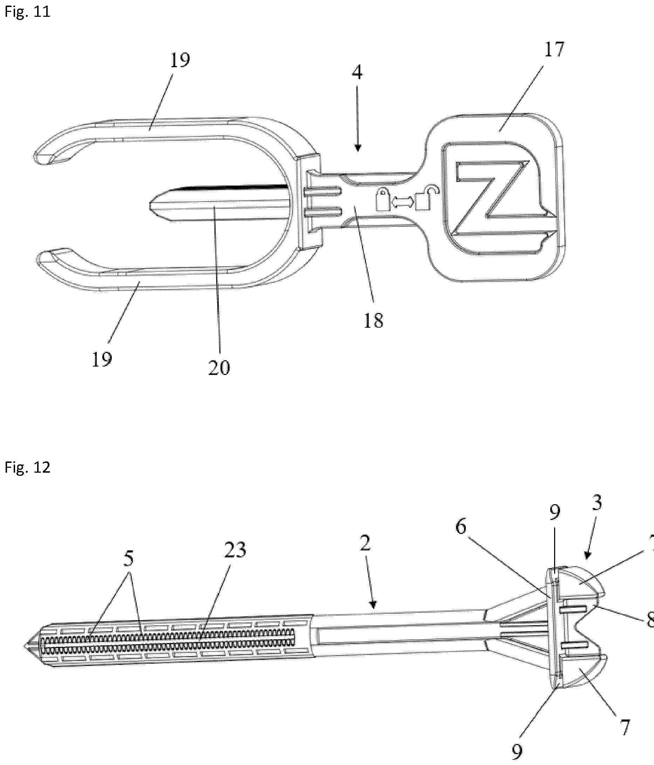

Par ailleurs, en référence à la figure 11, les moyens de verrouillage/déverrouillage 4 comprennent des moyens de préhension 17 solidaires d'une tige 18 à l'extrémité libre de laquelle s'étendent deux mors 19 élastiquement déformables et aptes à coopérer avec la partie tubulaire du cavalier 1, et une pluralité de lamelles 20 s'étendant entre les deux mors 7. Les deux mors 19 des moyens de verrouillage/déverrouillage 4 présentent une forme générale de C.

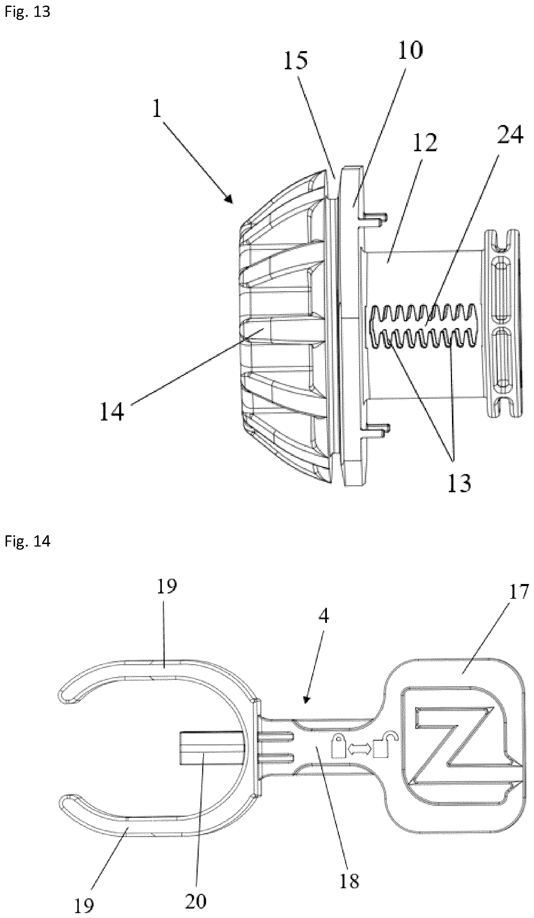

Selon une seconde variante d'exécution du dispositif suivant l'invention, en référence aux figures 12 à 14, ce dernier comporte de la même manière que précédemment un cavalier 1 destiné à se clipser sur un premier élément profilé communément appelé fourrure, une tige 2 destinée à coopérer avec le cavalier 1 et comportant à une extrémité une tête 3 destinée à se clipser sur un second élément profilé, et des moyens de verrouillage/déverrouillage 4 aptes à prendre au moins deux positions, une position dite déverrouillée dans laquelle dans laquelle le cavalier 1 est apte à coulisser le long de la tige 2 et une position verrouillée dans laquelle le cavalier 1 est bloqué sur ladite tige, le premier et le second élément profilé n'étant pas représenté sur la figure.

En référence à la figure 12, la tige 2 est munie de fentes transversales traversantes 5 parallèles sur une partie de sa longueur, sensiblement depuis la partie médiale de la tige 2 jusqu'à son extrémité distale, et d'une fente longitudinale 23 traversant les fentes transversales 5.

Il est bien évident que la tige 2 pourra comporter des fentes 5 que sur toute sa longueur sans pour autant sortir du cadre de l'invention.

Par ailleurs, ladite tige 2 comprend à son extrémité proximale une embase 6 sensiblement rectangulaire formant une garde, ladite embase 6 s'étendant perpendiculairement à la tige 2, dont la face opposée à la tige 2 porte la tête 3. Ladite tête 3 est constituée de deux plots 7 de forme sensiblement tétraédriques séparés par une entretoise 8 en forme générale de V. Chacun de ces deux plots 7 comprend, au voisinage de ladite embase 6, une gorge 9 qui s'étend parallèlement à l'embase 6, ces deux gorges 9 étant destinées à recevoir les deux rebords coplanaires d'un élément profilé de section sensiblement en forme de C, communément appelé fourrure, non représenté sur les figures.

De plus, en référence à la figure 10, le cavalier 1 est constitué d'une platine 10 comprenant un trou central 11, sur l'une de ses faces une partie tubulaire 12 formant un canal à l'intérieur duquel la tige 2 peut coulisser, ladite partie tubulaire 12 comprenant une pluralité de fentes 13 transversales et d'une fente longitudinale 24, et, sur sa face opposée, un second plot 14 sensiblement hémisphérique muni d'une gorge annulaire 15 à sa base, ladite gorge annulaire 15 étant apte à recevoir les deux rebords coplanaires d'un élément profilé de section sensiblement en forme de C, et d'un trou traversant 16, ledit trou traversant 16, le trou central 11 et la partie tubulaire étant coaxiaux.

Par ailleurs, en référence à la figure 11, les moyens de verrouillage/déverrouillage 4 comprennent des moyens de préhension 17 solidaires d'une tige 18 à l'extrémité libre de laquelle s'étendent deux mors 19 élastiquement déformables et aptes à coopérer avec la partie tubulaire du cavalier 1, et une pluralité de lamelles 20 s'étendant entre les deux mors 7. Les deux mors 19 des moyens de verrouillage/déverrouillage 4 présentent une forme générale de C.

Cette variante d'exécution se distingue de celle précédemment décrite par le fait que la tige 2 présente une section transversale circulaire et non en forme de croix.

Enfin, il est bien évident que les exemples que l'on vient de donner ne sont que des illustrations particulières en aucun cas limitatives quant aux domaines d'application de l'invention.

## Revendications

1. Dispositif pour la fixation de panneaux à distance d'une structure support, ledit dispositif comprenant au moins une tige (2) dont une première extrémité comporte des moyens de fixation (3) à ladite structure, un cavalier (1) conformé de manière à venir se clipser sur un élément profilé de section sensiblement en forme de C muni de deux rebords coplanaires, communément appelé fourrure, ledit cavalier (1) comportant une partie tubulaire (12) formant un canal à l'intérieur duquel la tige (2) peut coulisser afin de permettre un déplacement dudit cavalier (1) le long de la tige (2), et des moyens de verrouillage/déverrouillage (4) aptes à prendre au moins deux positions, une position dite déverrouillée dans laquelle le cavalier (2) est apte à coulisser le long de la tige (2) et une position verrouillée dans laquelle le cavalier (2) est bloqué sur la tige (2), les moyens de verrouillage/déverrouillage (4) comprenant des moyens de préhension (17) solidaires d'une tige (18) à l'extrémité libre de laquelle s'étendent deux mors (19) élastiquement déformables et aptes à coopérer avec la partie tubulaire (12) du cavalier (1), **caractérisé en ce que** les moyens de verrouillage/déverrouillage (4) comprennent au moins une lamelle (20) s'étendant entre les deux mors (19), ladite lamelle (20) étant apte à être insérée dans des premières fentes transversales (13) pratiquées dans la partie tubulaire (12) du cavalier (1) et dans des secondes fentes transversales (5) pratiquées dans la tige (2), les première et seconde fentes (13,5) s'étendant au droit les unes des autres lorsque la tige (2) est introduite dans la partie tubulaire (12) du cavalier (1).

2. Dispositif suivant la revendication 1 **caractérisé en ce que** les deux mors (19) des moyens de verrouillage/déverrouillage (4) présentent une forme générale de C.

3. Dispositif suivant la revendication 2 **caractérisé en ce que** chaque mors (19) présente sur sa face interne un creux cylindrique dit distal (21), s'étendant à proximité de l'extrémité distale dudit mors (19), de rayon de courbure sensiblement égal au rayon de la paroi externe de la partie tubulaire (12) du cavalier (1).

4. Dispositif suivant la revendication 3 **caractérisé en ce que** chaque mors (19) présente sur sa face interne un second creux cylindrique dit proximal (22), s'étendant à proximité de la tige (18) des moyens de verrouillage/déverrouillage (4), de rayon de courbure sensiblement égal au rayon de la paroi externe de la partie tubulaire (12) du cavalier (1).

5. Dispositif suivant l'une quelconque des revendications 1 à 4 **caractérisé en ce que** les moyens de verrouillage/déverrouillage (4) comprennent une pluralité de lamelles (20) s'étendant parallèlement les unes par rapport aux autres avec un espacement égal à l'espacement entre les fentes (5,13) et depuis la base des mors (19) jusqu'à la partie médiale desdits mors (19).

6. Dispositif suivant la revendication 5 **caractérisé en ce que** les extrémités distales des lamelles (20) sont concaves, le rayon de courbure des extrémités concaves étant sensiblement égal au rayon de la paroi externe de la partie tubulaire (12) du cavalier (1).

7. Dispositif suivant l'une quelconque des revendications 1 à 6 **caractérisé en ce que** la tige (2) munie des moyens de fixation (3) présente une section transversale circulaire.

8. Dispositif suivant l'une quelconque des revendications 1 à 6 **caractérisé en ce que** la tige (2) munie des moyens de fixation (3) présente une section transversale en forme de croix.

9. Dispositif suivant l'une quelconque des revendications 1 à 8 **caractérisé en ce que** les moyens de fixation de la tige (2) consistent en une tête (3) apte à se clipser sur un élément profilé en forme générale de U ou de C, ladite tête (3) comprenant des gorges (9).

10. Dispositif suivant l'une quelconque des revendications 1 à 9 **caractérisé en ce que** le cavalier (1) est constitué d'une platine (10) comprenant sur l'une de ses faces une partie tubulaire (12) formant un canal à l'intérieur duquel la tige (2) peut coulisser et sur sa face opposée un plot (14) sensiblement hémisphérique ou tronconique muni d'une gorge annulaire (15), ladite gorge annulaire (15) étant apte à recevoir les deux rebords coplanaires d'un élément profilé de section sensiblement en forme de C.

## Patentansprüche

1. Vorrichtung zum Befestigen von Platten in einem Abstand von einer Trägerstruktur, wobei die Vorrichtung mindestens eine Stange (2) umfasst, von der ein erstes Ende Befestigungsmittel (3) an der Struktur, einen Reiter (1), der angepasst ist, um an einem Profilelement mit einem Querschnitt im Wesentlichen in Form eines C einzurasten, das mit zwei komplanaren Rändern versehen ist, gemeinhin Futterstück genannt, beinhaltet, wobei der Reiter (1) einen röhrenförmigen Teil (12) beinhaltet, der einen Kanal bildet, in dessen Inneren die Stange (2) gleiten kann, um eine Verschiebung des Reiters (1) entlang der Stange (2) zu erlauben, und Mittel zum Verriegeln/Entriegeln (4), die imstande sind, mindestens zwei Positionen, eine sogenannte entriegelte Position, in der der Reiter (2) imstande ist, entlang der Stange (2) zu gleiten, und eine verriegelte Position, in der der Reiter (2) auf der Stange (2) blockiert ist, einzunehmen, wobei die Mittel zum Verriegeln/Entriegeln (4) Greifmittel (17) umfassen, die fest mit einer Stange (18) verbunden sind, an deren freien Ende sich zwei elastisch verformbare Klemmbacken (19) erstrecken und imstande sind, mit dem röhrenförmigen Teil (12) des Reiters (1) zusammenzuwirken, **dadurch gekennzeichnet, dass** die Mittel zum Verriegeln/Entriegeln (4) mindestens eine Lamelle (20) umfassen, die sich zwischen den beiden Klemmbacken (19) erstreckt, wobei die Lamelle (20) imstande ist, in erste querlaufende Schlitze (13), die in dem röhrenförmigen Teil (12) des Reiters (1) eingearbeitet sind, und in zweite querlaufende Schlitze (5) eingeführt zu werden, die in der Stange (2) eingearbeitet sind, wobei sich der erste und zweite Schlitz (13, 5) auf Höhe zueinander erstrecken, wenn die Stange (2) in den röhrenförmigen Teil (12) des Reiters (1) eingeführt ist.

2. Vorrichtung nach Anspruch 1, **dadurch gekennzeichnet, dass** die beiden Klemmbacken (19) der Mittel zum Verriegeln/Entriegeln (4) eine allgemeine Form eines C aufweisen.

3. Vorrichtung nach Anspruch 2, **dadurch gekennzeichnet, dass** jede Klemmbacke (19) an ihrer Innenfläche einen distal genannten zylindrischen Hohlraum (21) aufweist, der sich in der Nähe des distalen Endes der Klemmbacke (19) erstreckt, mit einem Krümmungsradius im Wesentlichen gleich dem Radius der Außenwand des röhrenförmigen Teils (12) des Reiters (1).

4. Vorrichtung nach Anspruch 3, **dadurch gekennzeichnet, dass** jede Klemmbacke (19) an ihrer Innenfläche einen zweiten proximal genannten zylindrischen Hohlraum (22) aufweist, der sich in der Nähe der Stange (18) der Mittel zum Verriegeln/Entriegeln (4) erstreckt, mit einem Krümmungsradius im Wesentlichen gleich dem Radius der Außenwand des röhrenförmigen Teils (12) des Reiters (1).

5. Vorrichtung nach einem der Ansprüche 1 bis 4, **dadurch gekennzeichnet, dass** die Mittel zum Verriegeln/Entriegeln (4) eine Vielzahl von Lamellen (20) umfassen, die sich in einem Anstand parallel zueinander erstrecken, der gleich dem Abstand zwischen den Schlitzen (5, 13,) und von der Basis der Klemmbacken (19) bis zum medialen Teil der Klemmbacken (19) ist.

6. Vorrichtung nach Anspruch 5, **dadurch gekennzeichnet, dass** die distalen Enden der Lamellen konkav sind, wobei der Krümmungsradius der konkaven Enden im Wesentlichen gleich dem Radius der Außenwand des röhrenförmigen Teils (12) des Reiters (1) ist.

7. Vorrichtung nach einem der Ansprüche 1 bis 6, **dadurch gekennzeichnet, dass** die Stange (2), die mit den Befestigungsmitteln (3) versehen ist, einen kreisförmigen Querschnitt aufweist.

8. Vorrichtung nach einem der Ansprüche 1 bis 6, **dadurch gekennzeichnet, dass** die Stange (2), die mit den Befestigungsmitteln (3) versehen ist, einen Querschnitt in Form eines Kreuzes aufweist.

9. Vorrichtung nach einem der Ansprüche 1 bis 8, **dadurch gekennzeichnet, dass** die Befestigungsmittel der Stange (2) aus einem Kopf (3) bestehen, der imstande ist, um an einem Profilelement in einer allgemeinen Form eines U oder eines C einzurasten, wobei der Kopf (3) Nuten (9) umfasst.

10. Vorrichtung nach einem der Ansprüche 1 bis 9, **dadurch gekennzeichnet, dass** der Reiter (1) aus einer Platine (10) besteht, die auf einer ihrer Flächen einen röhrenförmigen Teil (12) umfasst, der einen Kanal bildet, in dessen Inneren die Stange (2) gleiten kann, und auf seiner gegenüberliegenden Fläche einen im Wesentlichen halbkugelförmigen oder kegelstumpfförmigen Klotz (14), der mit einer ringförmigen Nut (15) versehen ist, wobei die ringförmige Nut (15) imstande ist, die beiden komplanaren Ränder eines Profilelements mit einem Querschnitt im Wesentlich in Form eines C aufzunehmen.

## Claims

1. A device for fastening panels at a distance from a support structure, said device comprising at least one rod (2) of which a first end includes means (3) for fastening to said structure, a link (1) shaped so to be clipped onto a profiled element with a substantially C-shaped section provided with two coplanar edges, commonly called furring strip, said link (1) including a tubular part (12) forming a channel inside which the rod (2) may slide in order to allow a displacement of said link (1) along the rod (2), and locking/unlocking means (4) capable of taking at least two positions, a so-called unlocked position in which the link (1) is capable of sliding along the rod (2) and a locked position in which the link (1) is blocked on the rod (2), the locking/unlocking means (4) comprising gripping means (17) integral with a rod (18) at the free end of which two jaws (19) elastically deformable extend and capable of cooperating with the tubular part (12) of the link (1), **characterized in that** the locking/unlocking means (4) comprise at least one blade (20) extending between the two jaws (19), said blade (20) being capable of being inserted into first transverse slots (13) made in the tubular part (12) of the link (1) and in second transverse slots (5) made in the rod (2), the first and second slots (13, 5) extending to the right of each other when the rod (2) is introduced into the tubular part (12) of the link (1).

2. The device according to claim 1 **characterized in that** the two jaws (19) of the locking/unlocking means (4) are generally C-shaped.

3. The device according to claim 2 **characterized in that** each jaw (19) has on its internal face a so-called distal cylindrical hollow (21), extending near the distal end of said jaw (19), with a radius of curvature substantially equal to the radius of the external wall of the tubular part (12) of the link (1).

4. The device according to claim 3 **characterized in that** each jaw (19) has on its internal face a second so-called proximal cylindrical hollow (22), extending near the rod (18) of the locking/unlocking means (4), with a radius of curvature substantially equal to the radius of the external wall of the tubular part (12) of the link (1).

5. The device according to any one of claims 1 to 4 **characterized in that** the locking/unlocking means (4) comprise a plurality of blades (20) extending parallel to each other with a spacing equal to the spacing between the slots (5, 13) and from the base of the jaws (19) to the medial part of said jaws (19).

6. The device according to claim 5 **characterized in that** the distal ends of the blades (20) are concave, the radius of curvature of the concave ends being substantially equal to the radius of the external wall of the tubular part (12) of the link (1).

7. The device according to any one of claims 1 to 6 **characterized in that** the rod (2) provided with the fastening means (3) has a circular cross section.

8. The device according to any one of claims 1 to 6 **characterized in that** the rod (2) provided with the fastening means (3) has a cruciate-shaped cross section.

9. The device according to any one of claims 1 to 8 **characterized in that** the means for fastening the rod (2) consist of a head (3) capable of clipping onto a generally U-shaped or C-shaped profiled element, said head (3) comprising grooves (9).

10. The device according to any one of claims 1 to 9 **characterized in that** the link (1) consists of a plate (10) comprising on one of its faces a tubular part (12) forming a channel inside which the rod (2) may slide and on its opposite face a stud (14) substantially hemispherical or frustoconical provided with an annular groove (15), said annular groove (15) being able to receive the two coplanar edges of a profiled element with a substantially C-shaped section.
